# EUROPEAN PATENT APPLICATION

(11) **EP 4 607 663 A1**
(43) Date of publication of application: **27.08.2025**
(21) Application number: 23895074.5
(22) Date of filing: 24.11.2023
(51) Int. Cl.: H01M 50/198, H01M 50/186, H01M 50/197, H01M 50/308, H01M 50/193, H01M 50/105, H01M 50/178

(54) **POUCH-TYPE SECONDARY BATTERY**

(30) Priority: 24.11.2022 KR 20220159794; 23.11.2023 KR 20230164379
(71) Applicant: LG Energy Solution, Ltd., Seoul 07335 (KR)
(72) Inventor: PARK, Eun Suk, Daejeon 34122 (KR); KIM, Sang Hun, Daejeon 34122 (KR); YU, Hyung Kyun, Daejeon 34122 (KR); LEE, Jae Ho, Daejeon 34122 (KR)
(74) Representative: Plasseraud IP
(86) International application number: PCT/KR2023/019082
(87) International publication number: WO 2024/112147

(57) **Abstract**

A pouch type secondary battery according to the present invention includes an electrode assembly, a pouch type case including an accommodation portion for accommodating the electrode assembly and a sealing portion for sealing the accommodation portion, an electrode lead connected to the electrode assembly and protruding to the outside of the pouch type case via the sealing portion, a lead film disposed between the electrode lead and the pouch type case, and a gas guide portion disposed between the electrode lead and the lead film, wherein the gas guide portion includes a first layer in contact with the lead film, and the first layer includes a polymer film having a storage modulus of 30 MPa to 650 MPa measured at 100 °C.

## Description

### TECHNICAL FIELD

### Cross-reference to Related Applications

This application claims the benefit of Korean Patent Application Nos. 10-2022-0159794 filed on 11/24/2022 and 10-2023-0164379 filed on 11/23/2023, in the Korean Intellectual Property Office, the disclosure of which is incorporated herein in its entirety by reference.

### Technical Field

The present invention relates to a pouch type secondary battery, and more particularly, to a pouch type secondary battery including a gas discharge portion.

### BACKGROUND ART

Secondary batteries are used in various categories including small-sized products such as digital cameras, P-DVDs, MP3Ps, mobile phones, PDAs, portable game devices, power tools, and E-bikes as well as large-sized products requiring high power such as electric vehicles and hybrid vehicles, power storage devices for storing surplus power or renewable energy, and backup power storage devices. The secondary batteries include nickel-cadmium batteries, nickel-hydrogen batteries, lithium ion batteries, and lithium ion polymer batteries.

The secondary batteries may be manufactured by accommodating an electrode assembly, in which a positive electrode, a negative electrode, and a separator sandwiched therebetween are alternately stacked, in a battery case, injecting an electrolyte, and then sealing the battery case. The secondary batteries are classified into pouch type secondary batteries and can type secondary batteries according to a material of a case accommodating an electrode assembly. In particular, the pouch type batteries may be manufactured by performing press processing on a flexible pouch film laminate to form a cup portion, and then accommodating an electrode assembly in a receiving space inside the cup portion and sealing a sealing portion.

The pouch type secondary batteries may generate gas inside a pouch when operated at high temperatures, overcharged, or brought with a short circuit. When gas pressure inside the pouch increases, the pouch may explode or ignite as it vents. To make sure that the issues above are prevented, typically, a gas discharge portion used to be placed on a sealing portion of the pouch. In this case, when the gas pressure inside the pouch increases, an interface between the pouch and the gas discharge portion is opened, thereby allowing gas to be discharged to the outside of the pouch. However, even when the pressure inside the pouch increased due to gas generation, the interface was not opened to allow the pressure inside the pouch to go beyond a critical level, causing the pouch to explode.

### DISCLOSURE OF THE INVENTION

### TECHNICAL PROBLEM

An aspect of the present invention provides a pouch type secondary battery capable of discharging gas to the outside before pressure inside a pouch rises to an excessively high level.

### TECHNICAL SOLUTION

According to an aspect of the present invention, provided is a pouch type secondary battery including an electrode assembly, a pouch type case including an accommodation portion for accommodating the electrode assembly and a sealing portion for sealing the accommodation portion, an electrode lead connected to the electrode assembly and protruding to the outside of the pouch type case via the sealing portion, a lead film disposed between the electrode lead and the pouch type case, and a gas guide portion disposed between the electrode lead and the lead film. In this case, the gas guide portion includes a first layer in contact with the lead film, and the first layer includes a polymer film having a storage modulus of 30 MPa to 650 MPa measured at 100 °C.

In the pouch type secondary battery according to the present invention, the polymer film may have a ratio (B/A) of coefficient of thermal expansion (B) measured at 60 °C to 120 °C to coefficient of thermal expansion (A) measured at - 30 °C to 10 °C in the range of 1.2 to 3.0. In this case, the polymer film may have a coefficient of thermal expansion (B) of 25 µm/cm·°C or greater measured at 60 °C to 120 °C, and have a coefficient of thermal expansion (A) of 25 µm/cm·°C or greater measured at -30 °C to 10 °C.

In the pouch type secondary battery according to the present invention, the polymer film may have an air permeability of 100 sec/100 cc or greater. In addition, the polymer film may have a water droplet contact angle of 100° or greater. The polymer film may include polytetrafluoroethylene (PTFE).

In the pouch type secondary battery according to the present invention, the gas guide portion may further include a second layer in contact with the electrode lead. In this case, the electrode lead, the second layer, the first layer, and the lead film may be sequentially stacked. In addition, the second layer may include acid modified polyolefin.

### ADVANTAGEOUS EFFECTS

According to the present invention, a gas guide portion to which a polymer film having a storage modulus of 30 MPa to 650 MP measured at 100 °C is applied is disposed between an electrode lead and a lead film, and thus an interface between the gas guide portion and the lead film is opened before pressure inside a pouch rises to an excessively high level, thereby allowing gas to be easily discharged to the outside of the pouch. Accordingly, the pouch is prevented from exploding under excessively elevated pressure inside the pouch due to gas generation to provide a pouch type secondary battery according to the present invention having excellent safety.

### BRIEF DESCRIPTION OF THE DRAWINGS

The following drawings attached herein illustrate preferred examples of the present invention by example, and serve to enable technical concepts of the present invention to be further understood together with detailed description of the invention given below, and therefore the present invention should not be interpreted only with matters in such drawings.
FIG. 1 is an exploded view of a pouch type secondary battery according to the present invention;
FIG. 2 is a cross-sectional view of a sealed pouch type secondary battery;
FIG. 3 is an example of a cross-sectional view of a pouch type secondary battery before a pouch type case is opened;
FIG. 4 is an example of a cross-sectional view of a pouch type secondary battery when a pouch type case is opened;
FIG. 5 is another example of a cross-sectional view of a pouch type secondary battery before a pouch type case is opened; and
FIG. 6 is another example of a cross-sectional view of a pouch type secondary battery before a pouch type case is opened.

### MODE FOR CARRYING OUT THE INVENTION

Advantages and features of the present disclosure and methods of accomplishing the same may be understood more readily by reference to the following detailed description of embodiments and the accompanying drawings. However, the present disclosure may be embodied in different forms, and these embodiments are provided only to make this disclosure thorough and complete and to fully convey the scope of the present disclosure to those skilled in the art, and thus the present disclosure is defined only by the scope of the appended claims. Like reference numerals denote like elements throughout specification.

Unless otherwise defined, all terms (including technical and scientific terms) used herein have the same meaning as commonly understood by one of ordinary skill in the art to which the present invention belongs. Terms as defined in a generally used dictionary are not construed ideally or excessively unless defined apparently and specifically.

Terms used herein are not for limiting the inventive concept but for describing the embodiments. As used herein, the singular forms include the plural forms as well, unless the context clearly indicates otherwise. The meaning of "comprises" and/or "comprising" as used herein does not exclude the presence or addition of one or more other components besides a mentioned component.

Herein, when an element "includes" a component, it may indicate that the element does not exclude another component unless explicitly described to the contrary, but may further include another component.

Herein, the description "A and/or B" refers to A or B, or A and B.

Herein, "%" refers to wt% unless indicated otherwise.

Herein, "storage modulus" indicates the storage modulus in a machine direction (MD) of a polymer film measured at 100 °C using dynamic mechanical analysis (DMA).

Herein, "coefficient of thermal expansion (CTE)" indicates the length extending in a MD direction when the temperature of a polymer film increases by 1 °C.

Herein, "air permeability" indicates the flow rate of air that passes through a polymer film.

Herein, "water droplet contact angle" indicates the angle formed between water on a surface of a polymer film and a contact surface of a polymer film.

A pouch type secondary battery according to the present invention includes an electrode assembly, a pouch type case comprising an accommodation portion for accommodating the electrode assembly and a sealing portion for sealing the accommodation portion, an electrode lead connected to the electrode assembly and protruding to the outside of the pouch type case via the sealing portion, a lead film disposed between the electrode lead and the pouch type case, and a gas guide portion disposed between the electrode lead and the lead film. The gas guide portion includes a first layer in contact with the lead film, and the first layer includes a polymer film having a storage modulus of 30 MPa to 650 MPa measured at 100 °C.

Hereinafter, respective components of the pouch type secondary battery of the present invention will be described in more detail with reference to the drawings.

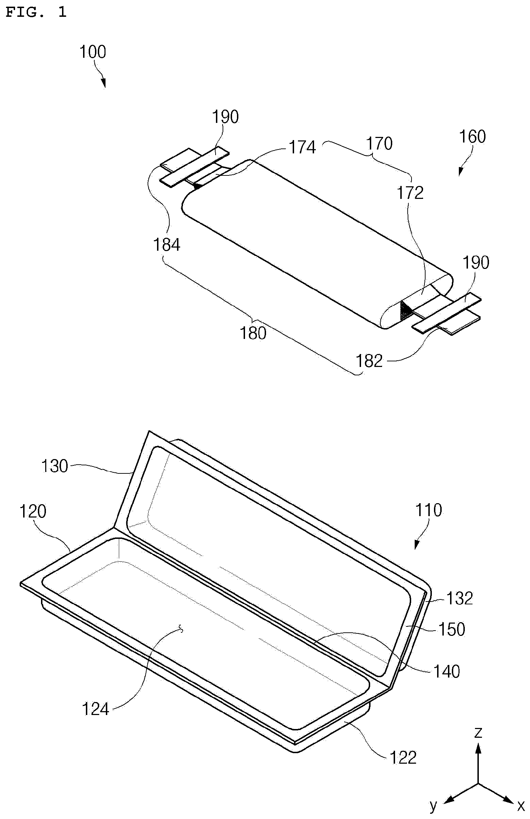

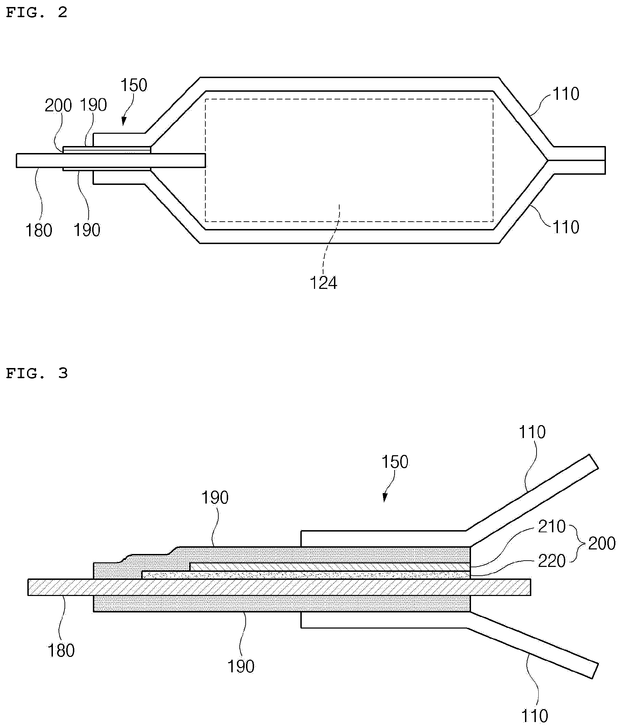

FIG. 1 is an exploded view of a pouch type secondary battery 100 according to the present invention, and FIG. 2 is a cross-sectional view of a sealed pouch type secondary battery 100. In FIG. 2, some components of the pouch type secondary battery 100 are not provided for convenience of understanding. As shown in FIGS. 1 and 2, the pouch type secondary battery 100 of the present invention includes a pouch type case 110, an electrode assembly 160, an electrode lead 180, a lead film 190, and a gas guide portion 200.

### (1) Pouch type case

The pouch type case 110 may store the electrode assembly 160 inside. The pouch type case 110 may be manufactured by molding a pouch film laminate. In this case, the pouch film laminate may include a base layer, a gas barrier layer, and a sealant layer. In the pouch film laminate, the base layer, the gas barrier layer, and the sealant layer may be sequentially stacked.

The base layer is formed on an outermost layer of the pouch film laminate to protect the secondary battery against external friction and collision. The base layer is made of a polymer and may thus electrically insulate the electrode assembly from the outside.

The base layer may be made of at least one or more materials selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, teflon, and glass fiber. Preferably, the base layer may be made of polyethylene terephthalate (PET), nylon, or a combination thereof, which has abrasion resistance and heat resistance.

The base layer may have a single film structure made of any one material. Alternatively, the base layer may have a composite film structure in which two or more materials are respectively formed as layers.

The base layer may have a thickness of 5 µm to 50 µm, specifically 7 µm to 40 µm, more specifically 25 µm to 38 µm. When the thickness of the base layer satisfies the above range, external insulation is excellent, and the entire pouch is not thick, and accordingly, energy density to volume of the secondary battery may be excellent.

The gas barrier layer is stacked between the base layer and the sealant layer to secure mechanical strength of the pouch, block the entry and exit of gases or moisture outside the secondary battery, and prevent electrolyte leakage from the inside of the pouch type case.

The gas barrier layer may be formed of metal, and may specifically be formed of an aluminum alloy thin film. When forming a gas barrier layer using an aluminum alloy thin film, gas barrier layer may have a predetermined level of mechanical strength and also be light in weight, and may complement electrochemical properties caused by the electrode assembly and electrolyte and obtain heat dissipation. The aluminum alloy thin film may include metal elements other than aluminum (Al), for example, may include at least one selected from the group consisting of iron (Fe), copper (Cu), chromium (Cr), manganese (Mn), nickel (Ni), magnesium (Mg), silicon (Si), and zinc (Zn).

The gas barrier layer may have a thickness of 40 µm to 100 µm, specifically 50 µm to 90 µm, more specifically 55 µm to 85 µm. When the thickness of the gas barrier layer satisfies the above range, moldability and gas barrier performance are excellent when molding a cup portion.

The sealant layer is thermally bonded together at a sealing portion when the pouch type case accommodating the electrode assembly inside is sealed to completely seal the inside of the pouch type case. To this end, the sealant layer may be formed of a material having excellent heat sealing strength.

The sealant layer may be formed of a material having insulation, corrosion resistance, and sealing properties. Specifically, the sealant layer is in direct contact with the electrode assembly and/or electrolyte inside the pouch type case, and may thus be formed of a material having insulation and corrosion resistance. In addition, the sealant layer is supposed to completely seal the inside of the pouch type case and block material movement between inside and outside, and may thus be formed of a material having high sealing properties (e.g., excellent heat sealing strength). To make sure that such insulation, corrosion resistance, and sealing properties are obtained, the sealant layer may be formed of a polymer material.

The pouch film laminate may be drawn, molded, or stretched by a punch or the like to manufacture the pouch type case 110. Accordingly, the pouch type case 110 may include a cup portion 122 and an accommodation portion 124. The accommodation portion 124 is a place to store the electrode assembly, and may indicate a receiving space formed in the shape of a pocket inside the cup portion 122 as the cup portion 122 is formed.

According to an embodiment of the present invention, the pouch type case 110 may include a first case 120 and a second case 130 as shown in FIG. 1. The first case 120 may include an accommodation portion 124 capable of accommodating the electrode assembly 160, and the second case 130 may cover the accommodation portion 124 from above to prevent the electrode assembly 160 from being separated to the outside of the battery case 110. The first case 120 and the second case 130 may be manufactured in a way that one side of the first case 120 and one side of the second case 130 may be connected to each other as shown in FIG. 1, but the embodiment of the present invention is not limited thereto, and the first case 120 and the second case 130 may be diversely manufactured, for example, individually manufactured by being separated from each other.

According to another embodiment of the present invention, when forming a cup portion in a pouch film laminate, two symmetrical cup portions 122 and 132 may be drawn and molded adjacent to each other in one pouch film laminate. In this case, the cup portions 122 and 132 may be formed in the first case 120 and the second case 130, respectively, as shown in FIG. 1. After accommodating the electrode assembly 160 in the accommodation portion 124 provided in the cup portion 122 of the first case 120, a bridge portion 140 formed between the two cup portions 122 and 132 may be folded such that the two cup portions 122 and 132 face each other. In this case, the cup portion 132 of the second case 130 may accommodate the electrode assembly 160 from above. Accordingly, the two cup portions 122 and 132 accommodate one electrode assembly 160, and thus an electrode assembly 160 that is thicker than when there is only one cup portion 122 may be accommodated. In addition, one edge of the secondary battery 100 is formed by folding the pouch type case 110, and accordingly, the number of edges to be sealed may be reduced when a sealing process is performed later. Accordingly, process speed of the pouch type secondary battery 100 may be improved and the number of sealing processes may be reduced.

The pouch type case 110 may be sealed while accommodating the electrode assembly 160 so that a portion of an electrode lead 180, which will be described later, i.e., a terminal portion, is exposed. Specifically, when the electrode lead 180 is connected to an electrode tab 170 of the electrode assembly 160 and a lead film 190 is formed on a portion of the electrode lead 180, the electrode assembly 160 may be accommodated in the accommodation portion 124 provided in the cup portion 122 of the first case 120, and the second case 130 may cover the accommodation portion 124 from above. Then, an electrolyte is injected into the accommodation portion 124 and the sealing portion 150 formed on an edge of the first case 120 and the second case 130 may be sealed.

The sealing portion 150 may serve to seal the accommodation portion 124. Specifically, the sealing portion 150 may be formed along an edge of the accommodation portion 124 and may thus seal the accommodation portion 124.

The temperature at which the sealing portion 150 is sealed may be 180 °C to 250 °C, specifically 200 °C to 250 °C, more specifically 210 °C to 240 °C. When the sealing temperature satisfies the above numerical range, the pouch type case 110 may obtain sufficient sealing strength through heat sealing.

### (2) Electrode assembly

The electrode assembly 160 may be inserted into the pouch type case 110 and sealed through the pouch type case 110 after electrolyte injection.

A positive electrode, a separator, and a negative electrode may be sequentially stacked to form the electrode assembly 160. Specifically, the electrode assembly 160 may include two types of electrodes, which are a positive electrode and a negative electrode, and a separator sandwiched between the electrodes to insulate the electrodes from each other.

The positive electrode and the negative electrode may have a structure in which an active material slurry is applied to an electrode current collector in the form of a metal foil or metal mesh containing aluminum and copper, respectively. Typically, granular active materials, auxiliary conductors, binders, and conductive materials are stirred with a solvent added to form a slurry. The solvent may be removed in subsequent processing.

A slurry mixed with an electrode active material, a binder, and/or a conductive material is applied to a positive electrode current collector and a negative electrode current collector to manufacture a positive electrode and a negative electrode, and the positive electrode and the negative electrode are stacked on both sides of the separator, and accordingly, the electrode assembly 160 may be manufactured into a predetermined shape. Types of the electrode assembly 160 may include a stack type, a jelly roll type, and a stack and folding type, but are not limited thereto.

The electrode assembly 160 may include an electrode tab 170.

The electrode tab 170 is connected to each of the positive electrode and the negative electrode of the electrode assembly 160, and protrudes outward from the electrode assembly 160, and may thus serve as a path through which electrons move between the inside and the outside of the electrode tab. A current collector included in the electrode assembly 160 may be provided with a portion to which an electrode active material is applied, and an end portion to which an electrode active material is not applied, that is, a non-coating portion. The electrode tab 170 may be formed by cutting the non-coating portion or formed by connecting a separate conductive member to the non-coating portion through ultrasonic welding or the like. As shown in FIG. 1, the electrode tab 170 may protrude in different directions from the electrode assembly 160, but is not limited thereto, and may be formed to protrude in various directions, such as protruding from one side in the same direction.

### (3) Electrode lead

The electrode lead 180 may supply electricity to the outside of the secondary battery 100. The electrode lead 180 may be connected to the electrode tab 170 of the electrode assembly 160 through spot welding, or the like.

The electrode lead 180 may be connected to the electrode assembly 160 and may protrude to the outside of the pouch type case 110 via the sealing portion 150. Specifically, one end of the electrode lead 180 may be connected to the electrode assembly 160, particularly to the electrode tab 170, and the other end of the electrode lead 180 may protrude to the outside of the pouch type case 110.

The electrode lead 180 may include a positive electrode lead 182 with one end connected to the positive electrode tab 172 and extending in a direction in which the positive electrode tab 172 protrudes, and a negative electrode lead 184 with one end connected to the negative electrode tab 174 and extending in a direction in which the negative electrode tab 174 protrudes. The other ends of both the positive lead 182 and the negative lead 184 may protrude to the outside of the battery case 110. Accordingly, electricity generated inside the electrode assembly 160 may be supplied to the outside. In addition, the positive electrode tab 172 and the negative electrode tab 174 are each formed to protrude in various directions, and accordingly, the positive electrode lead 182 and the negative electrode lead 184 may also extend in various directions. The positive electrode lead 182 and the negative electrode lead 184 may be made of materials different from each other. That is, the positive electrode lead 182 may be made of the same aluminum (Al) material as a positive electrode current collector, and the negative electrode lead 184 may be made of the same copper (Cu) or nickel (Ni)-coated copper material as a negative electrode current collector. A portion of the electrode lead 180 protruding to the outside of the battery case 110 may serve as a terminal portion and be electrically connected to an external terminal.

### (4) Lead film

The lead film 190 may prevent electricity generated from the electrode assembly 160 from flowing to the battery case 110 through the electrode lead 180, and allow the sealing of the battery case 110 to be maintained. To this end, the lead film 190 may be formed of a non-conductor having nonconductive properties in which electricity does not flow well. In general, as the lead film 190, relatively thin insulation tape easily attached to the electrode lead 180 and/or the gas guide portion 200 is widely used, but the embodiment of the present invention is not limited thereto, and thus any member capable of insulating the electrode lead 180 may be used.

The lead film 190 according to an embodiment of the present invention may be a gas-permeable film and may be disposed to surround an outer circumferential surface of the electrode lead 180 and the gas guide portion 200. Specifically, the electrode lead 180 and the gas guide portion 200 are in contact with each other on one side, and in this case, at least a portion of the electrode lead 180 and the gas guide portion 200 may be surrounded by the lead film 190. The lead film 190 may be placed to be limited within the sealing portion 150 in which the first case 120 and the second case 130 of the pouch type case 110 are thermally fused, and may make the electrode lead 180 and the gas guide portion 200 adhere to the battery case 110.

The lead film 190 may be disposed between the electrode lead 180 and/or the gas guide portion 200 and the pouch type case 110. For example, as shown in FIG. 2, a lower case 110, a lead film 190, an electrode lead 180, a gas guide portion 200, a lead film 190, and an upper case 110 may be stacked and disposed in this order in the sealing portion 150. In addition, although not shown in the drawing, as another example, a lower case, a lead film, a gas guide portion, an electrode lead, a lead film, and an upper case may be stacked and disposed in this order, and as another example, a lower case, a lead film, a gas guide portion, an electrode lead, a gas guide portion, a lead film, and an upper case may be stacked and disposed in this order.

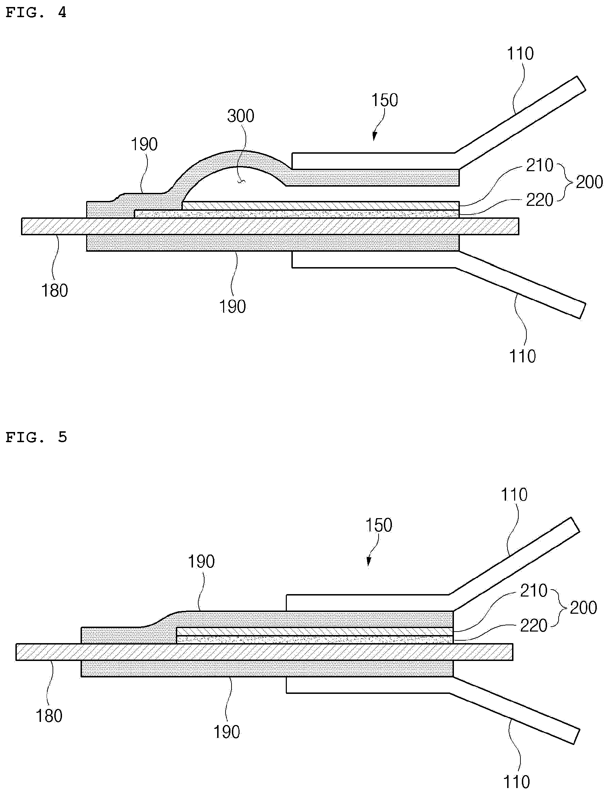

According to an embodiment of the present invention, as shown in FIG. 3 or FIG. 5, in the lead film 190, one end protruding outward from the pouch type case 110 protrudes further than one end of the gas guide portion 200 protruding outward from the pouch type case 110, and may thus be disposed to directly contact the electrode lead 180. In the case in which one end of the lead film 190 is disposed in direct contact with the electrode lead 180, that is, disposed to extend further than the gas guide portion 200 disposed on the electrode lead 180, when the lead film 190 on the gas guide portion 200 is opened with gas discharge, an area through which gas permeates through the lead film 190 may be easily secured, and compared to the case in which the lead film 190 is disposed without extension, strong adhesive force between the lead film 190 and the electrode lead 180 may minimize durability degradation caused by opening of the lead film 190 when gas is discharged.

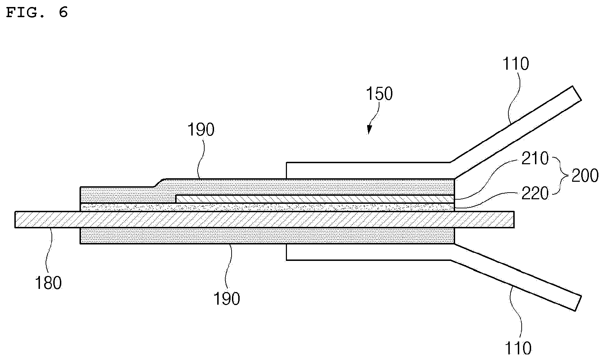

In addition, according to another embodiment of the present invention, as shown in FIG. 3 or FIG. 6, the second layer 220 of the gas guide portion 200 may be formed to be longer in an outer direction of the pouch type case 110 than the first layer 210, and one end of the lead film 190 protruding outward from the pouch type case 110 may be disposed to directly contact the second layer 220 instead of the first layer 210.

In particular, as shown in FIG. 3 above, in the case where one end of the lead film 190 protrudes further in the direction in which the electrode lead protrudes and comes into contact with the electrode lead 180, and the second layer 220 of the gas guide portion 200 extends further than the first layer 210, so that a portion of the lead film 190 is disposed to contact the second layer 220, the adhesive force between the lead film 190 and the gas guide portion 200 may stay strong in addition to the adhesive force between the lead film 190 and the electrode lead 180, creating a synergy effect even on the adhesive force between the electrode lead 180 and the gas guide portion 200 to obtain a gas discharge part having excellent durability.

Meanwhile, the lead film 190 may include at least one layer. Specifically, the lead film 190 may include a metal adhesive layer, a core layer, and a pouch adhesive layer, which are sequentially stacked.

The metal adhesive layer is in direct contact with the electrode lead 180 and may be used to make the lead film 190 adhere to the electrode lead 180. The metal adhesive layer may include any material that easily adheres to the electrode lead 180. Specifically, the metal adhesive layer may include acid modified polyolefin. For example, the metal adhesive layer may include at least one of acid modified polypropylene (PPa), acid modified polyethylene (PEa), or plasma-treated polypropylene (PP), but is not limited thereto. The metal adhesive layer may have a thickness of 50 µm to 80 µm, specifically 50 µm to 75 µm, more specifically 60 µm to 75 µm. When the thickness of the metal adhesive layer satisfies the above numerical range, there is an effect of preventing penetrated pinholes and leaks at an edge portion during fusion between the electrode lead and the lead film.

The core layer may be a layer placed at the center of the lead film 190. The core layer may include additives such as polypropylene, polyolefin elastomer (POE), fluorinated polyolefin, and/or colorant, but is not limited thereto. For example, the polymer included in the core layer may be a homopolymer. When the homopolymer is included in the core layer, the melting point of the core layer may be controlled within the above numerical range and deformation caused by heat may be minimized, which serves better for securing insulation. As another example, the polymer included in the core layer may be fluorinated polyolefin, which may be polytetrafluoroethylene, or may be a mixture of polytetrafluoroethylene and polypropylene, and as a mixture, the components may be mixed at a weight ratio of 9:1 to 1:9. The case may achieve greater gas permeation performance than when gas permeates through the lead film 190 via the gas guide portion 200. The core layer may have a thickness of 40 µm to 70 µm, specifically 50 µm to 70 µm, more specifically 60 µm to 70 µm. When the thickness of the core layer satisfies the above numerical range, deformation caused by heat applied upon fusion and sealing may be prevented to bring about a robust design effect in terms of securing insulation.

The pouch adhesive layer may be a layer in direct contact with the battery case 110, specifically the sealant layer of the pouch film laminate. The pouch adhesive layer may include polypropylene or polyolefin elastomer (POE), but is not limited thereto. In particular, the polymer included in the pouch adhesive layer may be a copolymer. The melting point of the pouch adhesive layer including a copolymer may be controlled within the above numerical range, and the pouch adhesive layer has a melting point similar to that of the polymer in the sealant layer of the pouch film laminate, which serves better for securing sealing processability. The pouch adhesive layer may have a thickness of 40 µm to 100 µm, specifically 40 µm to 80 µm, more specifically 40 µm to 60 µm. When the thickness of the pouch adhesive layer satisfies the above numerical range, there is an effect of securing a polymer (e.g., polypropylene) residual rate sufficient to obtain strength for sealing between the electrode lead and the pouch film laminate.

### (5) Gas guide portion

The gas guide portion 200 serves to form a path for discharging gas from the inside of the pouch type case 110 to the outside. As shown in FIG. 2, the gas guide portion 200 of the present invention may be disposed between the electrode lead 180 and the lead film 190.

FIG. 3 is a cross-sectional view of a pouch type secondary battery before a pouch type case is opened, and FIG. 4 is a cross-sectional view of a pouch type secondary battery when a pouch type case is opened. As shown in FIGS. 3 and 4, the gas guide portion 200 includes a first layer 210 in contact with the lead film 190, and the first layer 210 includes a polymer film. When the pressure inside the pouch type case 110 increases, an interface between the first layer 210 and the lead film 190 may be opened as shown in FIG. 4, thereby forming a gas discharge path 300. However, in the case of a pouch type secondary battery to which a typical gas guide portion is applied, the operating pressure of the gas guide portion is high, and accordingly, the gas guide portion fails to work under high pressure resulting from gas generation inside the pouch, causing the pouch to explode.

Accordingly, as a result of repeated research by the present inventors to overcome the issue, it was found that controlling storage modulus of the gas guide portion 200 to a specific numerical range allows an interface between the gas guide portion 200 and the lead film 190 to be opened before the pressure inside the pouch rises to an excessively high level, thereby discharging gas to the outside through the lead film 190, and thus the present invention has been completed.

Specifically, the storage modulus of the first layer 210 may affect restoring force and adhesive force with the lead film 190 depending on shear stress generated when pressure inside the case 110 increases. That is, the lower the storage modulus of the first layer 210, the easier it is to open as the internal pressure increases, lowering the operating pressure of the gas guide portion, and when the internal pressure goes down again through gas discharge, it can be restored to the original state without lifting, thereby minimizing electrolyte leakage or moisture penetration. However, when the storage modulus of the first layer 210 is too low, it may not be restored to the original state from the lifting state even though the internal pressure declines after opening the lead film 190, and the first layer 210 fails to hold the lead film 190, thereby allowing electrolyte to penetrate into the gas discharge path 300, providing greater chances of moisture infiltrating from the outside, and providing a risk that the first layer 210 may melt upon sealing. That is, by controlling the storage modulus to an appropriate level, the gas inside the case 110 is discharged to the outside through the gas discharge path 300 before the pressure inside the case 110 rises to an excessively high level, thereby lowering the pressure inside the pouch type case 110 to prevent the case 110 from exploding or igniting.

According to the present invention, a storage modulus of the polymer film measured at 100 °C may be 30 MPa to 650 MPa, may specifically be 600 MPa or less, 500 MPa or less, 450 MPa or less, 400 MPa or less, or 350 MPa or less, and may be 50 MPa or greater, 70 MPa or greater, or 100 MPa or greater. When the storage modulus of the polymer film is less than 30 MPa, the first layer 210 melts upon sealing of the pouch type case 110, thereby failing to form the gas discharge path 300. When the storage modulus of the polymer film is greater than 650 MPa, the first layer 210 is not easily deformed, thereby failing to open an interface between the first layer 210 and the lead film 190.

According to the present invention, preferably, the first layer 210 including a polymer film in which the ratio of coefficient of thermal expansion is controlled along with the storage modulus may be applied. Specifically, a ratio (B/A) of coefficient of thermal expansion (B) of the polymer film measured at 60 °C to 120 °C to coefficient of thermal expansion (A) of the polymer film measured at -30 °C to 10 °C may be 1.2 to 3.0, specifically 1.2 to 2.5, more specifically 1.3 to 2.0. When the coefficient of thermal expansion ratio (B/A) of the polymer film satisfies the above range, the first layer 210 does not melt during the process of sealing, and when the pressure inside the case 110 increases, an interface between the first layer 210 and the lead film 190 may be opened to form the gas discharge path 300.

The coefficient of thermal expansion ratio (B/A) may indicate that the coefficient of thermal expansion at high temperature is greater than the coefficient of thermal expansion at low temperature, and in this case, the condition in which gas is generated, that is, the pressure inside the case 110 increases, is generally high temperature, and accordingly, when the coefficient of thermal expansion is high at high temperature, the gas guide portion having low operating pressure may be obtained. In addition, a relatively low coefficient of thermal expansion at low temperature is applied, and accordingly, unnecessary opening of the gas discharge path 300 may be prevented in conditions that do not require gas discharge to reduce the chances of moisture penetration or electrolyte leakage, and in this case, as gas discharge may be performed by controlling the storage modulus, it is preferable that the ratio of coefficient of thermal expansion satisfies the above-described range.

In this case, the polymer film may have a coefficient of thermal expansion (B) measured at 60 °C to 120 °C of 25 µm/cm · °C or greater, specifically 100 µm/cm · °C to 450 µm/cm·°C, more specifically 150 µm/cm·°C to 300 µm/cm·°C. In addition, the polymer film may have a coefficient of thermal expansion (A) measured at -30 °C to 10 °C of 25 µm/cm·°C or greater, specifically 30 µm/cm °C to 200 µm/cm·°C, more specifically 90 µm/cm·°C to 150 µm/cm·°C.

According to the present invention, the polymer film may have an air permeability of 100 sec/100 cc or greater, specifically 100 sec/100 cc to 50,000 sec/100 cc, more specifically 100 sec/100 cc to 40,000 sec/100 cc. The air permeability indicates the time it takes for 100 cc of air to pass through a polymer film, and the lower the value, the better the air permeability. When the air permeability of the polymer film satisfies the above numerical range, the issue of failing to form a gas discharge path resulting from the fact that pores in the polymer film are blocked by the lead film melting upon pouch sealing may be prevented.

According to the present invention, preferably, the first layer 210 including a polymer film whose contact angle is controlled along with the storage modulus and the ratio of coefficient of thermal expansion may be applied. Specifically, the polymer film may have a water droplet contact angle of 100° or greater, specifically 100° to 150°, more specifically 100° to 130°. When the water droplet contact angle of the polymer film satisfies the above numerical range, the van der Waals force between the first layer 210 and the lead film 190 is reduced after sealing to bring about the effect of forming the gas discharge path 300 at an early stage.

The polymer film may include at least one of polytetrafluoroethylene (PTFE) or polyimide (PI), but is not limited thereto. In particular, it is preferable that the polymer film includes polytetrafluoroethylene because the gas discharge path 300 may be formed even in a condition of low pressure inside the pouch.

In the gas guide portion 200 according to an embodiment of the present invention, the pressure inside the pouch type case 110 increase due to gas generation, and accordingly, the first layer 210 and the lead film 190 are temporarily separated to open the interface, thereby forming the gas discharge path 300, and a polymer film that satisfies the storage modulus described above is applied to the first layer, and accordingly, the gas discharge path 300 may be formed at low internal pressure. When the interface between the lead film 190 and the first layer 210 is opened and gas is discharged to lower the internal pressure, as described above, the first layer 210 whose storage modulus is controlled makes restoration to the original state easy, and this may also contribute to the effect of preventing moisture infiltration and electrolyte leakage.

As described above, the mechanism for forming the gas discharge path 300 may be achieved when a polymer film satisfying the storage modulus is applied to the first layer 210, and according to another embodiment, a case where polymer film satisfies the coefficient of thermal expansion ratio with the coefficient of thermal expansion at high temperature is appropriately higher than the coefficient of thermal expansion at low temperature in the above-described range is preferable, and as another example, the polymer film may be optimally implemented when satisfying the above-described contact angle range.

In addition, according to another embodiment of the present invention, the gas guide portion 200 may have preferably, as described above, for durability, a structure in which the lead film 190 protrudes further than an end of the gas guide portion 200 in the outer direction of the case 110 and is disposed in direct contact with the electrode lead 180, and in this case, even with the repeated formation of the gas discharge path 300, strong adhesive force between the electrode lead 180 and the lead film 190 may prevent the case 110 itself from being opened and vented.

In addition, the gas guide portion 200 according to the present invention may further include a second layer 220 in contact with the electrode lead 180. Specifically, the second layer 220 may be disposed on the electrode lead 180, and the first layer 210 may be disposed on the second layer 220. The second layer 220 may be used to make the gas guide portion 200 adhere to the electrode lead 180. As described above, the second layer 220 may have a structure in which the second layer 220 protrudes further than an end of the first layer 210 in the outer direction of the case 110 and is disposed in contact with the lead film 190, and in this case, strong adhesive retention force among the electrode lead 180, the gas guide portion 200, and the lead film 190 may contribute to improving durability.

The second layer 220 may include any material that easily adheres to the electrode lead 180. Specifically, the second layer 220 may include acid modified polyolefin. For example, the second layer 220 may include at least one of acid modified polypropylene (PPa), acid modified polyethylene (PEa), or plasma-treated polypropylene (PP), but is not limited thereto.

### (6) Electrolyte

The pouch type secondary battery 100 according to the present invention may further include an electrolyte (not shown) injected into the pouch type case 110. The electrolyte is used to move lithium ions generated through electrochemical reactions of an electrode upon charging/discharging of the secondary battery 100, and may include a non-aqueous organic electrolyte solution that is a mixture of lithium salt and an organic solvent, or a polymer using a polymer electrolyte. In addition, the electrolyte may include a sulfide-based solid electrolyte, an oxide-based solid electrolyte, or a polymer-based solid electrolyte, and such solid electrolyte may have flexibility, and thus be easily deformed under external force.

Hereinafter, the present invention will be described in more detail through specific embodiments. however, Examples shown below are illustrated only for the understanding of the present invention, and the scope of the inventive concept is not limited thereto. It will be apparent to those skilled in the art that various modifications and alterations are possible within the scope and technical range of the present invention, and such modifications and alterations fall within the scope of claims included herein.

### Examples and Comparative Examples

### Example 1

### (1) Manufacture of pouch type case

A polyethylene terephthalate (PET) film having a width of 266 mm, a length of 50 m, and a thickness of 12 µm and a nylon film having a width of 266 mm, a length of 50 m, and a thickness of 25 µm were stacked on one side of an aluminum alloy thin film having a width of 266 mm, a length of 50 m, and a thickness of 60 µm, and a polypropylene film having a width of 266 mm, a length of 50 m, and a thickness of 50 µm was stacked on the other side to prepare a pouch film laminate having a structure of polyethylene terephthalate/nylon/aluminum alloy thin film/polypropylene film.

In this case, the polyethylene terephthalate film and the nylon film are base layers, the aluminum alloy thin film is a gas barrier layer, and the polypropylene film is a sealant layer.

The pouch film laminate was molded to manufacture a pouch type case including an accommodation portion and a sealing portion.

### (2) Manufacture of secondary battery

A negative electrode, a positive electrode, and a porous polyethylene separator were assembled using a stacking method, and then laminated to manufacture an electrode assembly. Thereafter, an electrode lead was coupled to the electrode assembly.

LiPF₆ was dissolved in a solvent (EC:EMC:DMC = volume ratio of 3:3:4 ) to 1.0 M to prepare an electrolyte. The electrode assembly was accommodated in the pouch type case with a front end of the electrode lead protruding to the outside, and the electrolyte was injected.

A 20 µm thick acid modified polypropylene film (second layer) and a 50 µm thick polytetrafluoroethylene film (first layer) were sequentially stacked on an upper surface of the electrode lead to form a gas guide portion. Then, a 200 µm thick polypropylene film (lead film) was stacked on each of a lower surface of the electrode lead and an upper surface of the gas guide portion.

Thereafter, the sealing portion of the pouch type case was sealed for 2 seconds in the conditions of a seal bar area of 200 mm × 10 mm, 220 °C, and 0.27 MPa, and then left at 60 °C for 4 hours to manufacture a pouch type secondary battery. In this case, of the sealing portion, the portion where the lead film is formed has a structure in which lower case/lead film/electrode lead/gas guide portion/lead film/upper case are sequentially stacked.

### Example 2

A pouch type case and a secondary battery were manufactured in the same manner as in Example 1, except that a 50 µm thick polytetrafluoroethylene film and a 50 µm thick polypropylene film were sequentially stacked as a polymer film applied to a first layer.

### Example 3

A pouch type case and a secondary battery were manufactured in the same manner as in Example 1, except that a 100 µm thick polytetrafluoroethylene film was used as a polymer film applied to a first layer.

### Comparative Example 1

A pouch type case and a secondary battery were manufactured in the same manner as in Example 1, except that a 100 µm thick polyurethane film was used as a polymer film applied to a first layer.

### Comparative Example 2

A pouch type case and a secondary battery were manufactured in the same manner as in Example 1, except that a 50 µm thick polyimide film was used as a polymer film applied to a first layer.

### Comparative Example 3

A pouch type case and a secondary battery were manufactured in the same manner as in Example 1, except that a 100 µm thick polypropylene film was used as a polymer film applied to a first layer.

### Experimental Example 1: Evaluation of physical properties of polymer film

Before sealing the pouch, the physical properties of each polymer film (gas guide portion) applied to the first layer in Examples 1 to 3 and Comparative Examples 1 to 3 were measured.

Specifically, the air permeability of the polymer film was calculated by measuring the time it took for 100 ml of air having a pressure of 0.05 MPa to pass through the polymer film using EG01-55-1MR from Asahi Seiko.

The water droplet contact angle of the polymer film was measured by measuring static contact angle of each substrate at room temperature using Phoenix mt from SEO.

The storage modulus of the polymer film was measured in the machine direction (MD) direction at 100 °C using DMA 850 from TA Instrument.

The coefficient of thermal expansion of the polymer film was measured by taking a sample having a width of 4.4 mm and a length of 50 mm using TMA Q400 from TA Instrument. The measuring was performed in the condition of a pre load of 0.1 N through N₂ purging at a heating rate of 5 °C/min in the temperature range of -30 °C to 120 °C. Thereafter, the coefficient of thermal expansion (B) of the polymer film measured at 60 °C to 120 °C was divided by the coefficient of thermal expansion (A) of the polymer film measured at -30 °C to 10 °C to calculate the coefficient of thermal expansion ratio (B/A).

The measurement results are shown in Table 1 below.

**[Table 1]**

| | Air permeability (sec/100cc) | Water droplet contact angle (°) | Storage modulus (MPa) | Coefficient of thermal expansion (B/A) |
|---|---|---|---|---|
| Example 1 | 22, 840 | 108 | 150 | 1.43 |
| Example 2 | 36,811 | 107 | 55 | 1.67 |
| Example 3 | 32,112 | 107 | 250 | 1.8 |
| Comparative Example 1 | 19, 642 | 91 | 10 | 1.13 |
| Comparative Example 2 | 27, 648 | 98 | 1700 | 0.907 |
| Comparative Example 3 | 30,043 | 94 | 3 | 4.569 |

### Experimental Example 2: Evaluation of operation of gas guide portion

In order to evaluate whether the gas guide portion of the pouch type secondary battery manufactured in Examples 1 to 3 and Comparative Examples 1 to 3 would work normally, the amount of a specific gas discharged from the pouch type secondary battery was measured in a vacuum atmosphere. Specifically, when a vacuum atmosphere was created outside the pouch type secondary battery using ELT3000 from INFICON, the flow rate of gaseous dimethyl carbonate (DMC) discharged from the inside of the pouch type case to the outside was measured. The measurement results are shown in Table 2 below.

### Experimental Example 3: Evaluation of gas discharge performance

To evaluate the performance of the gas guide portion of the secondary batteries manufactured in Examples 1 to 3 and Comparative Examples 1 to 3, the gas discharge rate was measured and the formation of a gas discharge path was determined. Specifically, CO₂ was injected into the pouch type secondary battery using pressure-resistant equipment from ITS to increase the pressure inside the pouch until the pressure difference between the inside and outside of the pouch reached 1.0 to 2.5 bar, and then the resulting product was stored in a 60 °C chamber for about 1 to 2 days. The decrease in pressure inside the pouch was determined during the period of storage to calculate gas discharge rate based on flow rate and pressure reduction values. In addition, the formation of a gas discharge path was evaluated by visually observing that the sealing portion was expanding. The results are shown in Table 2 below.
- o:: Gas discharge path formed
- X:: Gas discharge path not formed

**[Table 2]**

| | Gas discharge rate (cc/day, @60 °C) | | | | Gas discha rge path formed /not formed | Operation (mbar/s) |
|---|---|---|---|---|---|---|
| Pressure difference between inside and outside (bar) | 1.0 | 1.5 | 2.0 | 2.5 | | |
| Example 1 | 3.18 | 5.68 | 8.33 | 11.09 | O | > 1.0 x 10 |
| Example 2 | 3.82 | 5.33 | 7.51 | 10.41 | O | > 1.0 x 10 |
| Example 3 | 3.41 | 3.96 | 6.11 | 7.62 | O | > 1.0 x 10 |
| Comparative Example 1 | - | - | - | - | X | 1.5 x 10⁻⁶ |
| Comparative Example 2 | 0.50 | 0.77 | 1.00 | 9.6 | O | Less than 1.0 x 10⁻⁶ |
| Comparative Example 3 | - | - | - | - | X | Less than 1.0 x 10⁻⁶ |

According to Tables 1 to 2, in the case of Examples 1 to 3 in which the storage modulus of the polymer film measured at 100 °C is in the range of 30 to 650 MPa, it is seen that a gas discharge path is easily formed from the measured amount of steam, and in practice, as the pressure inside the pouch is relatively greater than the pressure outside of the pouch, the formation of a gas discharge path is observed with the naked eye, and gas discharge rate is significantly higher than that of Comparative Examples. In particular, it is seen that the pouch type secondary batteries of Examples 1 to 3 have a high gas discharge rate even when the pressure difference between the inside and outside of the pouch is low.

Meanwhile, in the case of Comparative Examples 1 and 3, the storage modulus of the polymer film was so low that the first layer of the gas guide portion melting upon sealing of the pouch type case, and accordingly, it was expected that no gas discharge path would be formed due to the measured small amount of steam, and in practice, a gas discharge path was not formed and the gas discharge rate was not measurable.

In the case of Comparative Example 2, based on the measured steam amount data, it was expected that a gas discharge path would not be formed, but when an actual internal pressure increased, the formation of a gas discharge path was observed with the naked eye. However, the storage modulus of the polymer film was too high, and accordingly, the gas guide portion was not easily deformed, indicating that the gas discharge rate was significantly lower than that of Examples.

### Description of Symbols

- 100:: Pouch type secondary battery
- 110:: Pouch type case
- 120:: First case
- 122:: Cup portion
- 124:: Accommodation portion
- 130:: Second case
- 132:: Cup portion
- 140:: Bridge portion
- 150:: Sealing portion
- 160:: Electrode assembly
- 170:: Electrode tab
- 172:: Positive electrode tab
- 174:: Negative electrode tab
- 180:: Electrode lead
- 182:: Positive electrode lead
- 184:: Negative electrode lead
- 190:: Lead film
- 200:: Gas guide portion
- 210:: First layer
- 220:: Second layer
- 300:: Gas discharge path

## Claims

1. A pouch type secondary battery comprising:
an electrode assembly;
a pouch type case comprising an accommodation portion for accommodating the electrode assembly, and a sealing portion for sealing the accommodation portion;
an electrode lead connected to the electrode assembly and protruding to the outside of the pouch type case via the sealing portion;
a lead film disposed between the electrode lead and the pouch type case; and
a gas guide portion disposed between the electrode lead and the lead film,
wherein the gas guide portion comprises a first layer in contact with the lead film, and
the first layer comprises a polymer film having a storage modulus of 30 MPa to 650 MPa measured at 100 °C.

2. The pouch type secondary battery of claim 1, wherein the polymer film has a ratio (B/A) of coefficient of thermal expansion (B) measured at 60 °C to 120 °C to coefficient of thermal expansion (A) measured at -30 °C to 10 °C in the range of 1.2 to 3.0.

3. The pouch type secondary battery of claim 2, wherein the polymer film has a coefficient of thermal expansion (B) of 25 µm/cm.°C or greater measured at 60 °C to 120 °C.

4. The pouch type secondary battery of claim 2, wherein the polymer film has a coefficient of thermal expansion (A) of 25 µm/cm.°C or greater measured at -30 °C to 10 °C.

5. The pouch type secondary battery of claim 1, wherein the polymer film has an air permeability of 100 sec/100 cc or greater.

6. The pouch type secondary battery of claim 1, wherein the polymer film has a water droplet contact angle of 100° or greater.

7. The pouch type secondary battery of claim 1, wherein the polymer film comprises polytetrafluoroethylene (PTFE).

8. The pouch type secondary battery of claim 1, wherein the gas guide portion further comprises a second layer in contact with the electrode lead.

9. The pouch type secondary battery of claim 8, wherein the electrode lead, the second layer, the first layer, and the lead film are sequentially stacked.

10. The pouch type secondary battery of claim 8, wherein the second layer comprises acid modified polyolefin.

11. The pouch type secondary battery of claim 1, wherein the lead film is disposed such that one end protruding outward of the pouch type case protrudes further than one end of the gas guide portion protruding outward of the pouch type case and is in direct contact with the electrode lead.

12. The pouch type secondary battery of claim 8, wherein the second layer of the gas guide portion is disposed such that one end protruding outward of the pouch type case protrudes further than the first layer of the gas guide portion protruding outward of the pouch type case and is in direct contact with the electrode lead.

13. The pouch type secondary battery of claim 1, wherein when pressure inside the pouch type case increases, an interface between the lead film and the first layer opened to form a gas discharge path.
